# FASCICULE DE BREVET EUROPEEN

(11) **EP 2 868 591 B1**
(45) Date de publication et mention de la délivrance du brevet: **25.12.2019**
(21) Numéro de dépôt: 14189887.4
(22) Date de dépôt: 22.10.2014
(51) Int. Cl.: B65D 35/10, B65D 35/12, B65D 35/44, B32B 15/085, B32B 15/20, B32B 27/08, B32B 27/30

(54) **Tête de tube comprenant un insert formant barrière**
Verbesserter Tubenkopf mit einem als Sperrschicht wirkenden Einleger
Tube head comprising an insert forming a barrier

(30) Priorité: 29.10.2013 FR 1360571
(43) Date de publication de la demande: 06.05.2015
(73) Titulaire: Albéa Services, 92230 Gennevilliers (FR)
(72) Inventeur: Kerman, Eric, 51000 CHALONS EN CHAMPAGNE (FR); Maurice, Thierry, 51000 CHALONS EN CHAMPAGNE (FR); Hermant, Etienne, 51000 CHALONS EN CHAMPAGNE (FR)
(74) Mandataire: Gevers & Orès

(56) Documents cités:
- EP-A1- 0 496 704
- EP-A1- 0 524 897
- EP-A1- 2 703 312
- EP-A2- 0 109 055
- EP-B1- 1 984 261
- WO-A1-2014/096056
- CH-A- 457 251

## Description

La présente invention concerne le domaine des tubes souples, et plus précisément des têtes de tels tubes.

Les tubes souples sont communément constitués d'une tête de tube associée à une jupe, la tête de tube comprenant un goulot pour l'extraction d'un produit contenu dans le tube, tandis que la jupe forme le volume interne du tube adapté pour recevoir un produit.

La jupe est conventionnellement formée d'une feuille multicouche, adaptée pour présenter des propriétés de résistance mécanique et d'étanchéité satisfaisantes.

La tête de tube est en revanche communément réalisée par injection de matériau plastique, ce qui peut s'avérer non satisfaisant pour certaines applications du fait de la nature très réactive de certains produits et de la pénétration de certains gaz et liquides dans le tube, ce qui altère le contenu du tube, ou au contraire la fuite de certains composants du contenu du tube, ce qui conduit à la dégradation du produit lui-même.

Afin de répondre à cette problématique, plusieurs solutions ont été proposées. Par exemple, CH 457 251 propose de placer dans la région de la tête de tube un insert, ou rondelle, se conformant à la face interne de l'épaule de la tête de tube de manière à former une barrière protectrice séparant la tête de tube du produit contenu dans le tube. L'insert permet ainsi de limiter l'infiltration et la fuite des composants indésirables au travers de la tête du tube et protège la tête du tube et le contenu du tube. Cet insert comprend en particulier une couche métallique en aluminium. Selon d'autres alternatives, un tel insert peut comprendre une couche en éthylène-alcool vinylique (EVOH).

De telles structures de tête de tube sont cependant complexes et coûteuses à réaliser. Notamment, il est difficile de positionner, en particulier de centrer, l'insert de façon à ce que l'épaule de la tête de tube soit correctement protégée. Or, l'insert doit être bien positionné, par exemple pour éviter que son extrémité périphérique soit en contact avec le contenu du tube, en particulier dans le cas d'inserts métalliques pour limiter la corrosion de l'insert, par exemple. Un mauvais positionnement pourrait également conduire à des déformations plastiques importantes de l'insert et amoindrir ses propriétés de barrière. Les périodes prolongées de stockage du produit pourraient alors conduire à une détérioration de la tête de tube et/ou du produit.

La présente invention vise à proposer une structure ne présentant pas de tels inconvénients.

A cet effet, la présente invention propose une tête de tube adaptée pour être associée à une jupe de manière à former un volume interne du tube, ladite tête de tube comprenant un corps, ledit corps comprenant un goulot et une épaule reliée au goulot, ladite tête de tube comprenant en outre un insert disposé en contact avec ladite épaule, de manière à former une barrière entre le corps et le produit contenu dans le volume interne, ledit insert comprenant une portion centrale se trouvant dans le prolongement d'un conduit de passage du produit à travers le goulot, ladite portion centrale fermant le goulot,
caractérisée en ce que ledit insert comprend un moyen de positionnement dans la tête de tube consistant en une déformation d'au moins une partie de ladite portion centrale de l'insert, ladite déformation étant concave.

En positionnant correctement l'insert dans la tête de tube, on assure une protection correcte de l'épaule de la tête de tube et de l'extrémité périphérique de l'insert. De plus, on limite le risque de déformations plastiques de celui-ci qui pourraient engendrer un affaiblissement de ses propriétés de barrière. L'invention permet ainsi de disposer d'une tête de tube présentant un insert formant un opercule isolant le volume interne du tube préalablement à sa première utilisation et formant une barrière correctement positionnée.

Selon différents modes de réalisation de l'invention, qui pourront être pris ensemble ou séparément :
- ledit corps est réalisé en matière plastique,
- ledit goulot présente à une première extrémité une ouverture par laquelle un produit est extrait du volume interne du tube,
- ladite épaule est reliée à une seconde extrémité du goulot opposée à la première extrémité,
- ladite portion centrale est la partie de l'insert correspondant à la projection dudit conduit sur ledit insert selon une direction d'extension du goulot,
- ladite portion centrale forme un disque non ajouré adapté pour obturer le goulot,
- ledit moyen de positionnement et/ou ledit moyen de centrage est configuré pour coopérer avec le goulot,
- ledit moyen de positionnement et/ou ledit moyen de centrage est dans l'alignement du goulot, autrement dit, des bords périphériques dudit moyen épousent un bord périphérique interne d'une extrémité longitudinale inférieure dudit goulot,
- ladite déformation est préformée sur l'insert,
- ladite déformation est en forme de dôme,
- ledit dôme est circulaire de diamètre D_{d} et de hauteur h_{d}, D_{d} étant sensiblement identique ou inférieur au diamètre de la section interne dudit goulot et/ou un ratio h_{d}/D_{d} étant inférieur à 1/3, voire 0,15, notamment 0,10,
- ledit insert comprend une région périphérique,
- ladite région périphérique est montée en appui contre une surface complémentaire du corps,
- ledit corps comprend en outre un épaulement interne enserrant la périphérie dudit insert contre la surface plane complémentaire du corps,
- ledit insert est disposé de manière sensiblement perpendiculaire à un axe longitudinal du goulot,
- ledit insert est formé d'un matériau multicouche,
- ledit matériau multicouche comprend une couche barrière métallique, en aluminium et/ou une couche barrière en éthylène-alcool vinylique (EVOH)
- ledit insert comprend une partie plane entourant le dôme,
- ladite partie plane forme l'ensemble ou une partie de la région périphérique,
- ladite partie plane se raccorde audit dôme selon un arrondi,
- ladite région périphérique ou une partie de ladite région présente une forme de révolution ne s'étendant pas au-delà d'un volume cylindrique de diamètre D et de hauteur h, un ratio de la valeur h/D étant inférieur à 0,1, préférentiellement 0,08, encore plus préférentiellement 0,065, le diamètre D correspondant au diamètre de l'insert.

Autrement dit, selon ce dernier aspect de l'invention, ledit insert est sensiblement plat. On constate d'ailleurs que, dans une telle configuration, le bon positionnement de l'insert dans la tête de tube est d'autant plus problématique. En effet, plus l'insert est plat, plus son centrage sur la tête de tube est délicat puisque la forme de l'insert elle-même ne contribue alors plus à son positionnement. Le bon positionnement de l'insert dépendra donc d'autant plus du dôme. Le rapport hd/h pourra en ce sens être avantageusement supérieur à 0,2, voire 0,3, voire encore 0,35.

L'invention concerne aussi un ensemble comprenant une tête de tube telle que décrite précédemment et une jupe souple associée à ladite tête de tube de manière à former un volume interne du tube, ledit volume interne étant isolé du goulot par l'insert.

Selon différentes caractéristiques de l'invention qui pourront être prises ensemble ou séparément :
- ledit ensemble comprend en outre un bouchon,
- ledit bouchon est adapté pour être vissé sur ledit goulot,
- ledit bouchon comprend un perforateur adapté de manière à permettre la perforation dudit insert pour réaliser une ouverture dans l'insert,
- ledit perforateur est configuré pour percer l'insert autour dudit moyen de positionnement, notamment à la base du dôme,
- l'ouverture présente une section inférieure ou égale à la section interne du goulot.

D'autres caractéristiques, buts et avantages de l'invention ressortiront de la description qui suit, qui est purement illustrative et non limitative, et qui doit être lue en regard des dessins annexés, sur lesquels :
- La figure 1 présente une vue en coupe d'une tête de tube selon un aspect de l'invention,
- La figure 2 présente un autre mode de réalisation d'une tête de tube selon un aspect de l'invention,
- La figure 3 présente un autre mode de réalisation d'une tête de tube selon un aspect de l'invention,
- La figure 4 présente une vue en coupe de la tête de tube présentée sur la figure 1 et associée à un bouchon perforateur.

Sur l'ensemble des figures, les éléments communs sont repérés par des références numériques identiques.

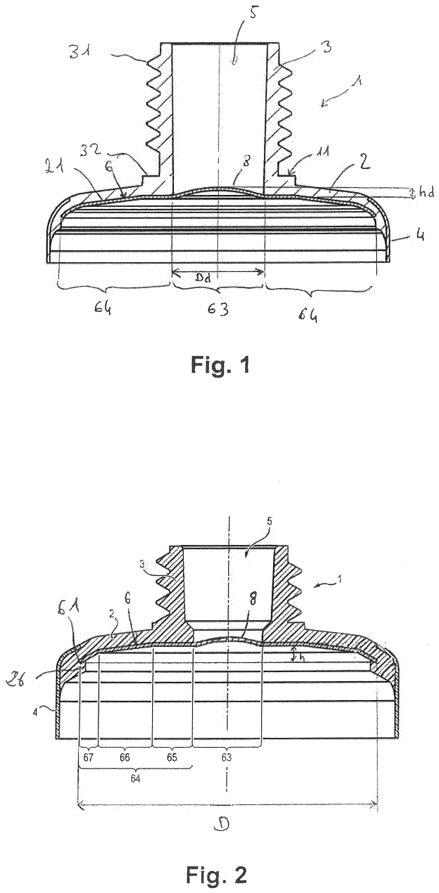

La figure 1 présente une vue en coupe d'une tête de tube 1 selon un aspect de l'invention. La tête de tube 1 comprend un corps 11 comprenant une épaule 2 et un goulot 3 lié à l'épaule 2. Le corps 11 est typiquement en matière plastique, par exemple en polyéthylène et/ou en polypropylène.

L'épaule 2 est liée à une jupe 4 formant le corps du tube associé et définissant ainsi un volume interne du tube.

Le goulot 3 définit un conduit interne 5, servant à la distribution d'un produit contenu dans le volume interne du tube. Dans le mode de réalisation représenté, le goulot 3 comprend un filetage externe 31 adapté pour permettre de visser un bouchon sur ledit goulot 3, ainsi qu'une surface d'appui 32 pouvant réaliser une fonction de butée pour un tel bouchon.

La tête de tube 1 est liée à la jupe 4, typiquement en surmoulant la tête de tube 1 sur la jupe 4, ou par exemple par soudage ou collage en assemblant la jupe 4 sur la tête de tube 1 formée préalablement, notamment par injection ou par injection compression, ou par toutes autres techniques.

La jupe 4 est typiquement formée de plastique et/ou de métal laminé; par exemple un assemblage multicouches comprenant une ou plusieurs couches de matériau métallique tel que de l'Aluminium, et une ou plusieurs couches de plastique, tel que le polyéthylène.

La tête de tube 1 comprend en outre un insert 6 disposé au contact de l'épaule 2, typiquement au contact d'une face 21 de l'épaule 2 orientée vers le volume interne du tube défini par la jupe 4. L'insert 6 est ainsi disposé en contact direct contre la face 21 de l'épaule 2, cette mise en contact étant réalisée par le surmoulage du corps 11 de la tête de tube 1 sur l'insert 6 qui permet notamment de fixer l'insert 6 au corps 11 de la tête de tube 1. Ladite face 21 de l'épaule 2 définit ainsi une surface d'appui plane ou sensiblement plane de manière à pouvoir recevoir l'insert 6.

Typiquement ledit insert 6 est formé d'un matériau multicouche comprenant une couche barrière limitant l'infiltration et la fuite des composants indésirables au travers de la tête du tube.

Les inserts 6 communément utilisés sont typiquement composés de deux couches de matériau plastique entourant la couche barrière intermédiaire. Les deux couches de matériau plastique servent à isoler la couche métallique du produit contenu dans le tube, qui est susceptible de la détériorer. La couche barrière comprend typiquement une couche métallique et/ou une couche en éthylène-alcool vinylique (EVOH). Un exemple de structure d'insert 6 est un insert multicouche de type Polyéthylène-Aluminium-Polyéthylène.

L'insert 6 comprend ici une portion centrale 63 et une région périphérique 64, la portion centrale 63 formant un disque non ajouré adapté pour obturer le goulot 3 de la tête de tube 1, et la région périphérique 64 étant typiquement tronconique, plane, ou une combinaison d'une ou plusieurs portions tronconiques et/ou planes s'étendant à partir de ladite portion centrale 63.

L'insert 6, et plus particulièrement sa portion centrale 63 forme ainsi un opercule, scellant le volume interne du tube défini par la jupe 4 et protégeant le produit qu'il contient.

Selon l'invention l'insert 6 comprend un moyen de positionnement 8 permettant de positionner correctement l'insert 6 dans la tête de tube 1, notamment par coopération avec le goulot 3. Il s'agit, ici, plus particulièrement d'un moyen de centrage 8.

Ledit moyen de centrage 8 tel que représenté est une déformation située dans la portion centrale 63 dudit insert 6. Il s'agit d'une déformation en forme de dôme située dans l'alignement du goulot 3, notamment concave, c'est-à-dire saillant à l'intérieur du goulot.

De façon avantageuse, ledit dôme est circulaire de diamètre D_{d} et de hauteur h_{d} tel que représenté sur la figure 1 où la hauteur h_{d} et le diamètre D_{d} à prendre en compte ont été indiqués. Le diamètre D_{d} est sensiblement identique ou inférieur au diamètre de la section interne dudit goulot 3. Le ratio h_{d}/D_{d} est inférieur à 1/3, préférentiellement inférieur à 0,15, notamment 0,10.

La déformation est préformée sur l'insert 6. Une telle déformation est ainsi facilement détectable pour permettre le bon positionnement de l'insert 6 et plus particulièrement son centrage dans la tête de tube 1. En effet, le placement du dôme dans l'alignement du goulot 3 de la tête de tube 1, permet un bon positionnement de l'insert 6 de manière à ce que l'épaule 2 de la tête de tube 1 et une extrémité périphérique 61 de l'insert 6 soient correctement protégés. Ce bon positionnement permet également de limiter les déformations plastiques de l'insert 6 qui peuvent diminuer ses propriétés de barrière. Le produit contenu dans le tube est ainsi protégé durablement et efficacement durant sa période de stockage préalable à son utilisation, ce qui représente typiquement la majeure partie de la durée de vie du tube. Ladite déformation pourra aussi intervenir lors du surmoulage de la tête de tube 1.

Cela étant, selon un autre mode de réalisation, non-illustré, ladite déformation de l'insert formant les moyens de positionnement pourra être convexe, c'est-à-dire saillant vers l'intérieur du volume interne.

Dans l'un comme dans l'autre cas, il est possible que ladite déformation de l'insert 6 soit configurée pour coopérer avec un poinçon de moulage de ladite tête de tube 1.

De façon avantageuse la région périphérique 64 de l'insert 6 ou une partie de la région périphérique 64 est sensiblement plane. A titre d'exemple, pour une tête de tube 1 présentant une forme de révolution, il est compris dans un volume cylindrique de diamètre D et de hauteur h, un ratio de la valeur h/D étant inférieur à 0,1, préférentiellement 0,08, encore plus préférentiellement 0,065, le diamètre D correspondant au diamètre de l'insert 6, tel qu'illustré figure 2 où la hauteur de h à prendre en compte a également été indiquée.

Autrement dit, même si l'insert 6 présente une ou des portions tronconiques, celle-ci présente un angle au sommet suffisamment grand, notamment supérieur à 80°, voire 85°.

Une telle caractéristique présente l'avantage de limiter les sollicitations qu'apporte sur l'insert 6 des formes coniques trop marquées, c'est-à-dire, avec un angle au sommet trop faible. En effet, de telles formes entrainent un travail de l'insert 6 lors de sa formation, un tel travail risquant d'affaiblir ledit insert 6, en particulier sa couche de barrière métallique.

Dans les modes de réalisation représentés sur les figures 1, 2 et 4, la géométrie de la section périphérique 64 est composée de l'association d'une section plane 65 et de deux sections tronconiques successives 66 et 67.

En variante, la section externe 67 pourra être formée d'un bord plié terminant sensiblement axialement, sur une faible longueur, typiquement inférieure à 1 mm, voire 0,5 mm.

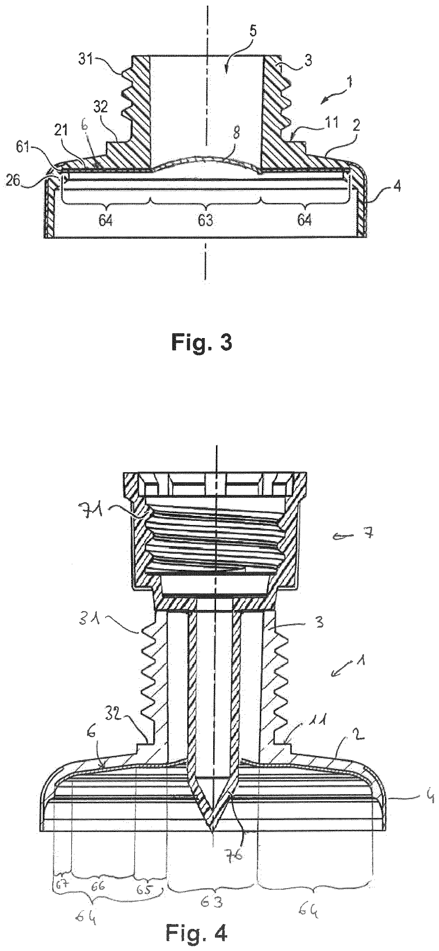

La figure 3 présente un autre mode de réalisation d'une tête de tube 1 selon un aspect de l'invention dans lequel l'insert 6 a une forme de disque plan, à l'exception du dôme 8, et ne nécessite donc pas d'étapes de déformation plastique qui amoindriraient ses propriétés mécaniques et en particulier les propriétés mécaniques de couches métalliques de l'insert, et notamment ses propriétés lui permettant de jouer le rôle de barrière.

Dans ces différents modes de réalisation, la section périphérique 64 est montée en contact d'une surface complémentaire du corps 11, tandis que la portion centrale 63 forme un opercule adapté pour obturer le goulot 3 de la tête de tube 1 préalablement à sa première utilisation lors de laquelle ladite portion centrale est perforée au moins partiellement par un perforateur 76.

L'angle entre la portion centrale plane 63 et la section la plus inclinée de la section périphérique 64, en l'occurrence la section 67 est typiquement compris entre 0 et 30°, par exemple entre 10 et 30° ou égal à 30°, permettant de simplifier l'injection pour la formation de la tête de tube. Alternativement ou cumulativement, l'angle entre la section la plane 65 et la section tronconique voisine 66 est, par exemple, entre 0 et 15°, notamment entre 5 et 10°. Plus généalement, l'angle entre deux sections voisines est, par exemple, entre 0 et 15°, notamment entre 5 et 10°. Par ailleurs, l'insert est avantageusement arrondi entre sa partie plane 65 et le dôme. Un angle entre ladite partie plane 65 et une tangente au dôme au niveau de sa périphérie est compris, par exemple, entre 0 et 15°, notamment entre 5 et 10°.

Dans cette gamme de valeurs, les propriétés mécaniques de l'insert et en particulier les propriétés mécaniques de couches métalliques de l'insert 6, et notamment ses propriétés lui permettant de jouer le rôle de barrière ne sont pas affectées. En effet, l'insert ne subit qu'une faible déformation plastique et la rupture de la couche métallique n'est pas atteinte.

Dans les modes de réalisation représentés sur les figures 2 et 3, l'épaule 2 de la tête de tube 1 est surmoulée sur l'insert 6 de manière à recouvrir la bordure périphérique externe 61 de l'insert 6, par exemple en formant un épaulement interne 26 enserrant l'extrémité périphérique 61 dudit insert 6 contre la surface plane complémentaire du corps 11 et protégeant ainsi la couche intermédiaire métallique de l'insert 6.

La perforation de l'insert 6 par le perforateur 76 (figure 4) forme certes une bordure périphérique interne de l'insert par laquelle la couche intermédiaire métallique est exposée. Toutefois, compte tenu de la durée de vie d'un tel tube après sa première utilisation, le risque de dégradation de l'insert 6 après sa perforation est négligeable.

En effet, la durée de conservation d'un tube dans son état avec l'insert non perforé, correspondant par exemple à son stockage, sa manutention, son transport, est conventionnellement très supérieure à sa durée de conservation après sa première utilisation.

La protection de l'insert 6 préalablement à la première utilisation du tube associé et donc son bon positionnement dans la tête de tube 1 est un facteur important de la bonne conservation du produit contenu par le tube, ce que permet de réaliser la présente invention.

La tête de tube selon l'invention est typiquement associée à un bouchon perforateur, par exemple du type présenté sur la figure 4.

Le bouchon perforateur 7 tel que présenté est réversible ; il présente une première extrémité munie d'un taraudage interne 71 adapté pour coopérer avec le filetage externe 31 du goulot 3 et ainsi visser le bouchon perforateur 7 sur la tête de tube 1, et une seconde extrémité munie d'un perforateur 76 adapté pour être inséré dans le goulot 3 et perforer tout ou partie de l'insert 6, et plus précisément tout ou partie de sa portion centrale 63 obturant le goulot 3.

Dans la vue en coupe représentée sur la figure 4, le perforateur 76 est dimensionné de manière à ce que lorsque le bouchon perforateur 7 est en appui contre le goulot 3, l'extrémité perforante du perforateur 76 vienne dépasser la position de l'insert 6 dans la tête de tube 1 et puisse le perforer, permettant ainsi à l'utilisateur de réaliser une ouverture faisant communiquer le volume interne du tube et le conduit interne 5 du goulot de manière à pouvoir se servir du produit contenu dans le volume interne.

## Revendications

1. Tête de tube (1) adaptée pour être associée à une jupe (4) de manière à former un volume interne du tube, ladite tête de tube (1) comprenant un corps (11), ledit corps comprenant un goulot (3) et une épaule (2) reliée au goulot (3), ladite tête de tube (1) comprenant en outre un insert (6) disposé en contact avec ladite épaule (2), de manière à former une barrière entre le corps (11) et le produit contenu dans le volume interne, ledit insert (6) comprenant une portion centrale (63) se trouvant dans le prolongement d'un conduit de passage du produit à travers le goulot, ladite portion centrale fermant le goulot (3), **caractérisée en ce que** ledit insert comprend un moyen de positionnement (8) dans la tête de tube (1) consistant en un moyen de centrage (8) situé dans ladite portion centrale (63) et consistant en une déformation d'au moins une partie de ladite portion centrale (63) de l'insert (6), ladite déformation étant concave.

2. Tête de tube (1) selon l'une quelconque des revendications précédentes, dans laquelle le moyen de centrage (8) est dans l'alignement du goulot (3).

3. Tête de tube (1) selon la revendication précédente, dans laquelle ladite déformation est préformée sur l'insert (6).

4. Tête de tube (1) selon l'une quelconque des revendications précédentes, dans laquelle ladite déformation est en forme de dôme.

5. Tête de tube (1) selon la revendication précédente, dans laquelle ledit dôme est circulaire de diamètre D_{d} et de hauteur h_{d}, D_{d} étant sensiblement identique ou inférieur au diamètre de la section interne dudit goulot (3) et/ou un ratio h_{d}/D_{d} étant inférieur à 1/3.

6. Ensemble comprenant une tête de tube (1) selon l'une des revendications précédentes et une jupe souple (4) associée à ladite tête de tube (1) de manière à former un volume interne du tube, ledit volume interne étant isolé du goulot (3) par l'insert (6).

7. Ensemble (1) selon la revendication 6 , comprenant en outre un bouchon (7) adapté pour être vissé sur ledit goulot (3), ledit bouchon comprenant un perforateur (76) adapté de manière à permettre la perforation dudit insert (6) pour réaliser une ouverture dans l'insert (6).

8. Ensemble (1) selon la revendication 7 , dans lequel ledit perforateur (76) est configuré pour percer l'insert (6) autour dudit moyen de positionnement (8).

## Patentansprüche

1. Tubenkopf (1), der angepasst ist, um einer Schürze (4) so zugewiesen zu werden, um ein Innenvolumen zu bilden, wobei der Tubenkopf (1) einen Körper (11) umfasst, wobei der Körper einen Hals (3) und eine Schulter (2) umfasst, die mit dem Hals (3) verbunden ist, wobei der Tubenkopf (1) weiter einen Einsatz (6) umfasst, der so in Kontakt mit der Schulter (2) angeordnet ist, um eine Barriere zwischen dem Körper (11) und dem Produkt zu bilden, das im Innenvolumen enthalten ist, wobei der Einsatz (6) einen Mittelabschnitt (63) umfasst, der sich in der Verlängerung eines Durchgangskanals durch den Hals hindurch befindet, wobei der Mittelabschnitt den Hals (3) schließt,
**dadurch gekennzeichnet, dass** der Einsatz ein Positionierungsmittel (8) im Tubenkopf (1) umfasst, das aus einem Zentriermittel (8) besteht, das im Mittelabschnitt (63) gelegen ist, und aus einer Verformung mindestens eines Teils des Mittelabschnitts (63) des Einsatzes (6) besteht, wobei die Verformung konkav ist.

2. Tubenkopf (1) nach einem der vorstehenden Ansprüche, wobei das Zentriermittel (8) in der Flucht des Halses (3) ist.

3. Tubenkopf (1) nach dem vorstehenden Anspruch, wobei die Verformung auf dem Einsatz (6) vorgeformt ist.

4. Tubenkopf (1) nach einem der vorstehenden Ansprüche, wobei die Verformung in Kuppelform ist.

5. Tubenkopf (1) nach dem vorstehenden Anspruch, wobei die Kuppel kreisförmig im Durchmesser D_{d} und von einer Höhe h_{d} ist, wobei D_{d} im Wesentlichen identisch oder kleiner als der Durchmesser des Innenquerschnitts des Halses (3) ist und/oder ein Verhältnis h_{d}/D_{d} kleiner als 1/3 ist.

6. Einheit, umfassend einen Tubenkopf (1) nach einem der vorstehenden Ansprüche und eine flexible Schürze (4), die dem Tubenkopf (1) so zugewiesen ist, um ein Innenvolumen der Tube zu bilden, wobei das Innenvolumen durch den Einsatz (6) vom Hals (3) isoliert ist.

7. Einheit (1) nach Anspruch 6, weiter umfassend eine Kappe (7), die angepasst ist, um auf den Hals (3) geschraubt zu werden, wobei die Kappe einen Perforator (76) umfasst, der so angepasst ist, um die Perforation des Einsatzes (6) zu ermöglichen, um eine Öffnung im Einsatz (6) zu schaffen.

8. Einheit (1) nach Anspruch 7, wobei der Perforator (76) konfiguriert ist, um den Einsatz (6) um das Positionierungsmittel (8) herum zu durchstechen.

## Claims

1. Tube head (1) adapted to be connected to a skirt (4) so as to form an internal volume of the tube, said tube head (1) comprising a body (11), said body comprising a neck (3) and a shoulder (2) connected to the neck (3), said tube head (1) further comprising an insert (6) arranged in contact with said shoulder (2), so as to form a barrier between the body (11) and the product contained in the internal volume, said insert (6) comprising a central portion (63) located in the extension of a conduit for passing the product through the neck, said central portion closing the neck (3),
**characterised in that** said insert comprises a positioning means (8) in the tube head (1) consisting of a centring means (8) situated in said central portion (63) and consisting of a deformation of at least one portion of said central portion (63) of the insert (6), said deformation being concave.

2. Tube head (1) according to any one of the preceding claims, wherein the centring means (8) is in alignment with the neck (3).

3. Tube head (1) according to the preceding claim, wherein said deformation is preformed on the insert (6).

4. Tube head (1) according to any one of the preceding claims, wherein said deformation is dome-shaped.

5. Tube head (1) according to the preceding claim, wherein said dome is circular, of diameter D_{d} and of height h_{d}, D_{d} being substantially identical to or less than the diameter of the internal cross-section of said neck (3) and/or a ratio h_{d}/D_{d} being less than 1/3.

6. Assembly comprising a tube head (1) according to one of the preceding claims and a flexible skirt (4) connected to said tube head (1) so as to form an internal volume of the tube, said internal volume being isolated from the neck (3) by the insert (6).

7. Assembly (1) according to claim 6, further comprising a stopper (7) adapted to be screwed on said neck (3), said stopper comprising a perforator (76) adapted so as to make it possible to perforate said insert (6) to achieve an opening in the insert (6).

8. Assembly (1) according to claim 7, wherein said perforator (76) is configured to pierce the insert (6) around said positioning means (8).
